# EUROPEAN PATENT APPLICATION

(11) **EP 4 029 366 A1**
(43) Date of publication of application: **20.07.2022**
(21) Application number: 21152059.8
(22) Date of filing: 18.01.2021
(51) Int. Cl.: A01G 13/00, E04B 7/00, F04D 25/08

(54) **DEPLOYABLE AND RETRACTABLE DEVICE COMPRISING A PLURALITY OF LAMELLAE**

(71) Applicant: Freshape SA, 1690 Villaz-St-Pierre (CH)
(72) Inventor: ALAGON CARRILLO, Sebastián, 1323 Romainmôtier (CH)
(74) Representative: Schneiter, Sorin

(57) **Abstract**

The present invention concerns a deployment device comprising a plurality of lamellae provided to be in a first, retracted position, in which said lamellae are stacked, and in a second, deployed position, in which said lamellae are dispersed and/or disposed side by side thereby covering an increased area. In an embodiment, the device comprises a mechanical arrangement for deploying and/or retracting said lamellae. The invention also provides an assembly comprising a plurality of said devices. The device may be used for protecting a zone, site, field or construction from meteorological exposure, or for attaching photovoltaic cells, for example.

## Description

### Technical Field

The present invention relates to a deployment device comprising a plurality of lamellae, the use of the device for protecting a space and/or an area from meteorological exposure, to a method of operating the deployment device, and to an assembly comprising two or more devices of the invention.

### Background Art and Problems Solved by the Invention

Meteorological factors such as sunlight, rain, snow, hail and wind have always required appropriate measures of protections. Such protection may be required for areas, such as agrarian areas, where crops requiring protection may be cultivated, for areas where humans or animals are located and/or stay for some time, as well as human constructions of all sorts, such as buildings, transport infrastructure, including bridges, railways, and streets, sheds, fields (for agriculture), gardens, greenhouses to mention some examples.

The present invention addresses the objective of providing a versatile protection device, for example a protection that can be adjusted to deal with different meteorological situations, which can be applied universally, for various types of spaces and areas, including human infrastructure, such as buildings and others as mentioned above, for example.

It is also an objective of the invention to provide a scalable protection device or assembly, suitable for protecting various dimensions and/or surfaces.

It is an objective of the invention to provide a device and/or assembly that can be used to control the impact of meteorological factors, in particular a device and/or assembly for controlling the climate experienced by an area or space in response to meteorological factors, wherein the control allows a user to adjust an impact. It is thus an objective to provide an adjustable device and/or assembly.

Another objective of the invention is to provide a device that can be used as a support for particular functionalities, which, for example exploit meteorological factors, for example with the goal of harvesting energy. An example is a device that serves as a support for photovoltaic cells or modules, for transforming solar energy into electricity. The functionalities may also include measuring functions, such as sensors, or for light redirecting substances. Such a device can be provided on constructions or human-made modifications of the landscape, but can also be used directly on the ground.

It is also an objective of the invention to provide a deployable and/or unfoldable and retractable device or assembly.

It is an objective of the invention to provide a multifunctional unfoldable and/or retractable device, which is capable of providing an unfolded area that can be used as a support for various functionalities, including light reflecting and/or photovoltaic uses.

### Summary of the Invention

In an aspect, the invention provides a deployment device comprising a plurality of lamellae provided to be in a first, retracted position and in a second, deployed position, wherein, in said deployed position, said lamellae cover an area that is preferably increased compared to the area covered by the plurality of lamellae in the retracted position.

In an aspect, the invention provides a deployment device comprising a plurality of lamellae provided to be in a first, retracted position, in which said lamellae are stacked, and in a second, deployed position, in which said lamellae are disposed side by side thereby covering an increased area, wherein said laminar deployment device comprises a mechanical arrangement comprising rigid links pivotally connecting successive lamellae, said mechanical arrangement enabling and/or guiding the displacement of said lamellae between said retracted and deployed positions.

In an aspect, the invention provides an assembly comprising a plurality of deployment devices in accordance with the invention.

In an aspect, the invention provides a site, zone or area, such as an agricultural field, or a construction, such as a building, comprising the device and/or the assembly of the invention.

In an aspect, the invention provides the use of the device and/or the assembly of the invention as a support for photovoltaic devices, as an adjustable shading structure and/or for the protection from meteorological factors such as, for example, from rain, snow, hail, and sun of a space or area.

Further aspects and preferred embodiments of the invention are defined herein below and in the appended claims. Further features and advantages of the invention will become apparent to the skilled person from the description of the preferred embodiments given below.

### Brief Description of the Drawings

**Figures 1A** to **1D** are perspective (Figs 1A, 1C) and lateral side (Figs 1B, 1D) views of a device in accordance with an embodiment of the invention, shown in retracted (Figs 1A, 1B) and deployed (Figs 1C, 1D) positions. The mechanical arrangement enabling the deployment is only partially shown.
**Figures 1E** shows a lamella that is used in the device shown in Figures 1A-1D.
**Figures 1F** and **1G** shows another embodiment of a lamellae that may be used in the device of the invention.
**Figure 2A** to **2C** are elevational views showing a device in accordance with an embodiment of the invention in the retracted (Fig. 2A), intermediate (Fig. 2B) and unfolded, deployed (Fig. 2C) positions. In these figures, the mechanical arrangement enabling the deployment is shown.
**Figures 3A** to **3C** schematically illustrate the mechanical deployment and/or retraction arrangement in accordance with an embodiment of the invention.
**Figures 3D** to **3F** schematically illustrate the mechanical deployment and/or retraction arrangement in accordance with another embodiment of the invention.
**Figure 4** shows an assembly of the invention in a retracted position including a support and/or socket on which a plurality of deployment assemblies in accordance with embodiments of the invention are mounted.
**Figures 5A** to **5D** are perspective views of a building comprising a single assembly (Figs 5A, 5B) or several assemblies (Figs 5C, 5D), each assembly comprising a plurality of deployment assemblies in accordance with an embodiment of the invention.
**Figures 6A** to **6C** are perspective views showing a device in accordance with another embodiment of the invention in the unfolded, deployed (Fig. 6A), intermediate (Fig. 6B) and retracted (Fig 6C) positions.

Hereinafter, preferred embodiments of the device of the invention are described, in order to illustrate the invention, without any intention to limit the scope of the present invention.

### Detailed Description of the Preferred Embodiments

The present invention relates to a deployable and/or retractable device comprising a plurality of lamellae. In the device, the lamellae may be present in a first position, which may be referred to as a retracted, folded, closed and/or stacked position, and a second position, which may be referred to as an extracted, deployed, unfolded, open, and/or unstacked position. In said first position, the lamellae are generally arranged in such a manner that they cover a surface that is smaller than a surface covered by said lamellae in a said second position. Preferably, in said first position, said plurality of lamellae are stacked, whereas, in said second position, said lamellae are dispersed, scattered, spread and/or disposed side by side.

The "surface covered" may be a surface on the ground or on a construction that can be covered and protected, for example from exposure to meteorological factors, such that, when said lamellae are in the second position, a larger area on the ground or of the surface of a building or other construction exposed to such meteorological factors is covered.

Said lamellae preferably comprise two opposed sides providing the main part of the overall surface area of said lamellae. These opposed sides may be referred to as first and second sides or front and back sides, respectively, of each lamella. Generally, the dispersal, spreading and and/or side-by side disposal of the lamellae results in the front surfaces of the lamellae to become exposed and thereby forming together an increased area.

In said stacked position, an individual lamella is placed on top and/or below a respective preceding or succeeding lamellae, in such a manner that a back or front side of the individual lamella is covered by the preceding and/or succeeding lamellae, respectively.

It is noted here that the expressions "preceding" and/or "succeeding" should be understood as relative terms used with respect to successively arranged items, such that, for example, a "succeeding" lamella may be considered as well as a "preceding" lamella, depending on the starting point. For facilitating the comprehension of the present description, the term "first lamellae" will be used for the deployable lamella that is connected to a support that remains immobile with respect to the movement conducted by a deployment mechanism of the deployable lamellae during deployment and/or retraction of the device. In accordance with this terminology, the "last lamella" is considered to be the deployable lamellae that has only one neighbouring lamella within the plurality of lamellae of a device. The "second lamellae", for example, is the lamella that is sandwiched between said "first lamellae" and a "third lamellae", when said device is in the stacked position.

Preferably, as will be described in more detail elsewhere in this specification, during the deployment and/or retraction the lamellae of the plurality of lamellae, all deployable lamellae move simultaneously, relative to each other and relative to a support.

As will be described elsewhere in more detail, the plurality of lamellae of a device of the invention are preferably connected to a mechanical arrangement the purpose of which is to enable the coordinated and/or simultaneous deployment and/or retraction of at least a group of lamellae.

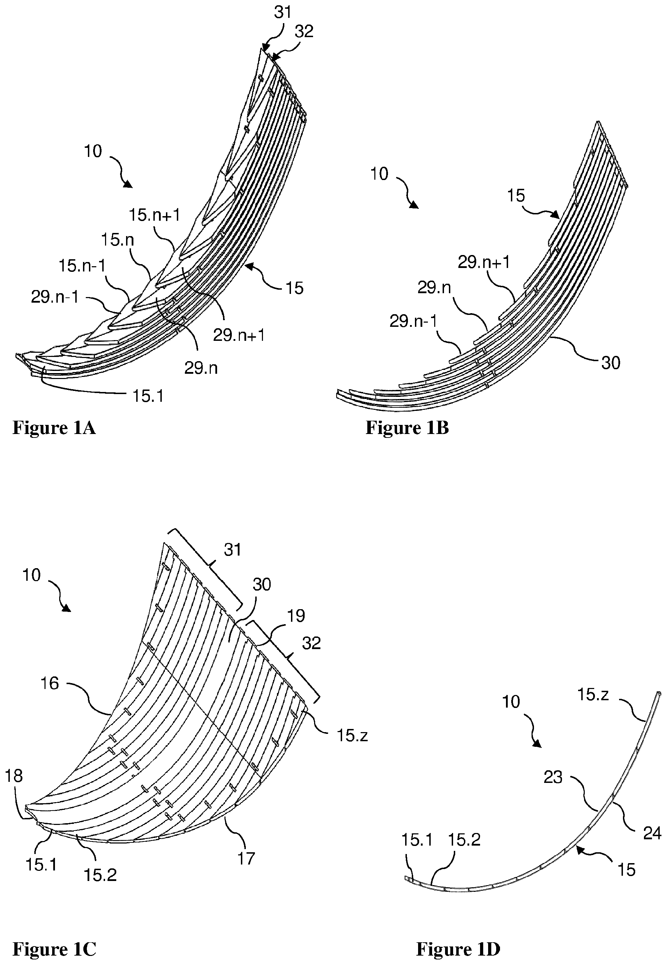

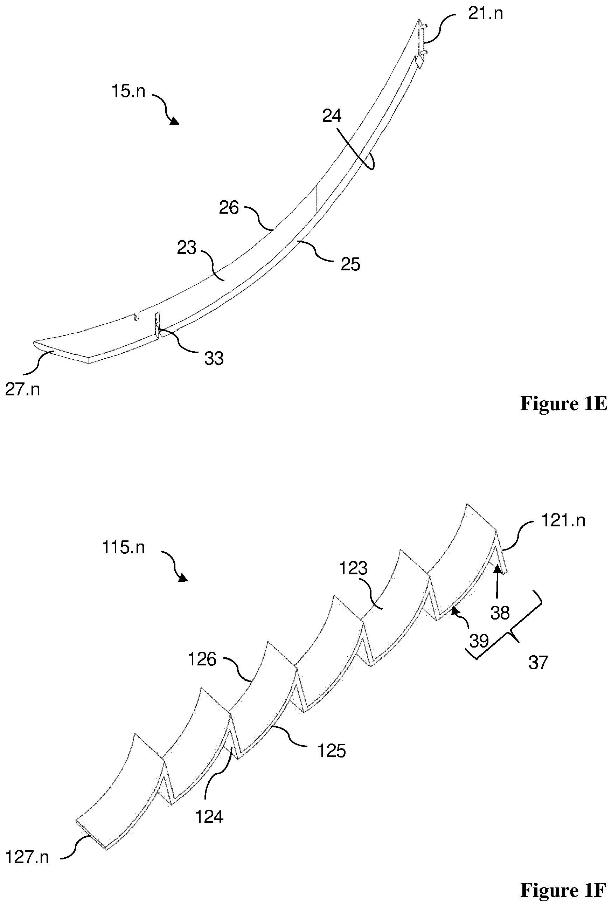

**Figures 1A** to **1D** show the lamellae 15 of an embodiment of the deployment device 10. An individual lamella 15.n is shown in **Figure 1E****.** The deployment device of the embodiment shown in Figs 1A-1D comprises two groups 31, 32 of lamellae, which are part of the same device 10, wherein each group of lamellae forms a stack when said plurality of lamellae 15 are in the stacked position.

The invention is not limited to a particular number of lamellae per deployment device and/or per group of a deployment device, however, in an embodiment, the device 10 comprises 1-1000, preferably 2-400, more preferably 4-200, and even more preferably 6-100 and most preferably 8-60 deployable lamellae 15. These numbers may apply to as device as a whole or to a single group of lamellae if the device has several groups.

In another embodiment, the device 10 comprises 2-50, preferably 4-40, more preferably 6-30 and most preferably 8-20 deployable lamellae 15. These numbers may apply to as device as a whole or to a single group of lamellae if the device has several groups.

In the embodiment shown in Figs 1A-1D, the device 10 comprises overall 22 deployable lamellae 15, wherein two groups 31, 32 are present, each group being formed of 11 deployable lamellae 15.

The reference 15.n is to be understood as a reference to any particular lamellae within the device or within a group of lamellae, in case the device comprises groups as shown in Figs 1A-1D. The references 15.n-1, and 15.n+1 thus refer to the preceding and the succeeding lamellae of lamella 15.n, respectively. Assuming that n refers to the integer 2, and 15.n-1 would thus be the first lamella, n may thus be any positive integer from 2 to 999, in a device having 1000 deployable lamellae, for example.

A deployment device 10 may comprise one, two, three or more groups of deployable lamellae 15, for example 1 to 4 groups of deployable lamellae. Preferably, the groups of a device share a common support 30 relative to which said one, two or more groups are deployably connected.

The lamellae of all groups of a device may be linked by the mechanical arrangement so as to deploy and/or retract simultaneously. Alternatively, the lamellae of each group may be deployed and/or retracted separately and/or independently of another group of lamellae in the same device.

In Fig. 1A the lamellae 15 are stacked. As shown, in this position, an individual lamella 15.n is sandwiched between a successive lamella 15.n+1 and a preceding lamellae 15.n-1.

**Figure 1E** shows an individual lamella 15.n. It could also be the first lamella 15.1 or the last lamella 15.z. The lamella 15.n is longitudinal and therefore has two extremities, which are defined by the front and rear sides 27.n and 21.n, respectively. The distance between the front and rear sides 27.n and 21.n defines the overall length of the lamella. If the front and rear sides do not extend in parallel, as shown in Fig. 1E, the overall length is determined as applicable, in the embodiment shown by the length of the right side 26 of the lamella 15.n.

The lamella further comprises two lateral sides, such as left and right sides 25, 26, respectively, which extend substantially in parallel along the longitudinal extension. The distance between the two lateral sides defines the width of the lamella. Furthermore, the lamella comprises first and second (or front and back) opposed surfaces 23 and 24. The distance between the front and back surfaces generally defines the thickness of the lamella. One may also say that the "thickness" is preferably considered to be the extension of a lamella in the direction that is normal to first and second opposed surfaces 23, 24 of the lamellae, or normal to a point on one of said first and second opposed surfaces 23, 24, taking into consideration that the lamella is curved in the embodiment shown.

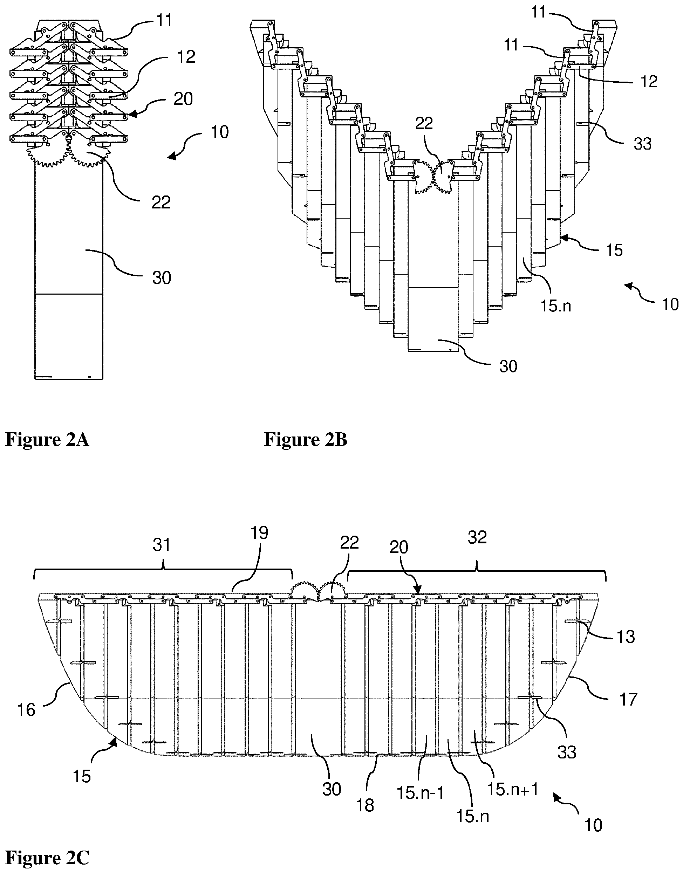

The lamella may further comprise provision for pivotally connecting rigid links of the mechanical arrangement 20 (Figs 2A-3C). For example, in the embodiment shown in Fig. 1E, two slots 33 are provided, one of the two slots being open towards the left side 25, and the other slot towards the right side 26. In these slots 33, an axle is provided for pivotally connection said rigid links. The axle (visible in Fig. 1E) extends substantially along the longitudinal direction, such that rotation of the link substantially perpendicular to the longitudinal direction is enabled. These links will be described in more detail elsewhere in this specification.

The lamellae in the device of the invention preferably have an overall lamellar aspect, in that the length of the lamellae is generally larger than the width, and the width is generally larger than the thickness. It is noted here that this definition generally applies to most of the lamellae in the device, but is not meant to exclude the possibility of the presence of some lamellae, for example the last lamella 15.z in Fig. 1C, which may have a particular dimension that does not necessarily fit in this definition. The reason is that the lamellae also define an outline of the overall device when the device is deployed, which may determine the dimensions of some of the lamella so as to be outside the definition.

The lamellae may also be considered as and/or encompass one or more selected from the group consisting sheets, layers, slats, plates, strips, slabs, foils, flakes, leaves, planes, and so forth.

In an embodiment, said lamellae are rigid and/or comprise a rigid material. In such a case, the lamellae may contribute to support and/or to the mechanical function of the mechanical displacement arrangement. In other embodiments, the invention also encompasses flexible or soft lamellae, in which case the mechanical arrangement assumes also at least part of the support of the lamellae. In this case, the mechanical arrangement generally comprises additional rigid support elements, such as rigid links, bars and the like, so as to provide rigid structure that can support the lamellae and at the same time allow for the deployment and/or retraction.

In most and preferably in all of the lamellae of the device of the invention, the front and back surfaces 23, 24 preferably provide together the major part of the overall surface of the lamellae, preferably more than 75% and most preferably more than 85% of the overall surface of most of the lamellae. This may not necessarily apply to all lamellae, for example in situations where very short lamellae are comprised in the device, for example the shortest final lamellae 15.z at the left and right sides in Fig. 1C, which have a surface that is generally small compared to the surface of preceding lamellae in the same device.

The front and back surfaces 23, 24 are preferably overall smooth, regular and/or continuous. This is not meant to exclude the presence of mechanical structures, for example protruding from the surfaces or provided in recesses, cut-outs and/or slots 33, which are provided for particular functionalities added to the lamellae, such as for connecting the lamellae with the mechanical deployment arrangement, or for fixing any device or object on the front or back surfaces, such as, for example, solar cells.

When said plurality of lamellae are in the stacked position, an individual lamella 15.n is preferably placed on or below an individual preceding lamellae 15.n-1. The first deployable lamella 15.1 that is connected to the fixed, immobile support or support lamella 30, is preferably placed on or below said support, and/or the last lamella being placed on or below the last but one lamella.

When said plurality of lamellae are in a deployed position, said plurality of lamellae are preferably arranged side by side, for example as shown in Figure 1C. In the deployed position, the left side 25 of an individual lamella 15.n is placed next to and preferably in parallel to the right side 26 of a preceding or successive lamella (15.n-1 or 15.n+1), respectively, and the right side 26 of said individual lamella 15.n is placed next to the left side 25 of a successive or preceding lamella (15.n+1 or 15.n-1), respectively.

Preferably, in the deployed position, the lamellae of said plurality of lamella are aligned with respect to their top and/or bottom surfaces 23, 24. For example, they are positioned laterally one next to each other. The alignment of the top and/or bottom surfaces of the lamellae of the device is preferably such that a thickness of the lamellae of the device is preferably minimized and preferably corresponds substantially to the thickness on an individual lamella, as shown in Fig. 1D.

In the stacked position, the largest thickness of the plurality of lamellae is the same or larger than the thickness of all the lamellae together, as shown in the top right of Fig. 1B.

In an embodiment, the lamellae of the device preferably all have the same thickness. This does not exclude the possibility encompassed by the invention of devices comprising lamellae having different thicknesses.

In an embodiment, the device may comprise one or more lamellae that are curved in the longitudinal direction. Preferably, the lamellae may be curved in the direction of their longitudinal extension and/or in a direction that is perpendicular to a direction of deployment. The curvature may result in the first and second surfaces 23, 24 not being flat, but curved. In other words, an imaginary line placed on the front or back surface 23, 24 and extending in parallel to the left or right side or border 25, 26 may not be horizontal but curved, at least in some part of the longitudinal extension. One or more of the lamellae may also comprise one or more flat (front and/or back) surface sections and one or more curved surface sections, along (preferably in parallel to) the longitudinal extension of the lamella.

In an embodiment, a stack formed by said stacked lamellae, is curved in the longitudinal direction of said lamellae.

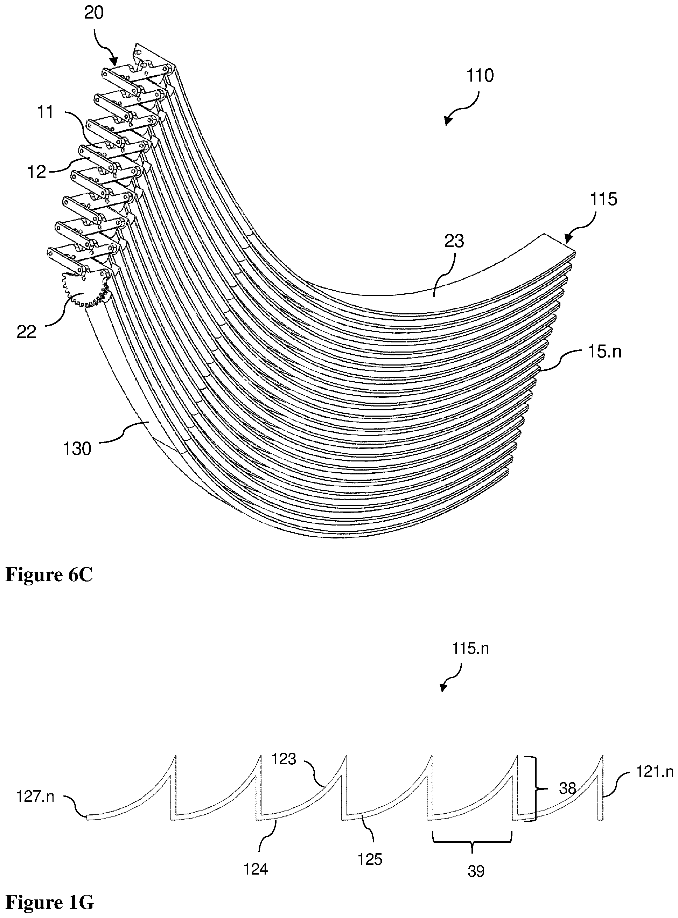

**Figures 1F** and **1G** show another embodiment of a lamella 115.n that may be used in accordance with the invention. As with the lamella 15.n shown in Fig. 1E, lamellae 115.n has front and rear sides or extremities 127.n and 121.n, respectively. The distance between these sides determines the length of the lamella.

The lamella 115.n further comprises two lateral sides, such as left and right sides 125, 126, respectively, which may extend substantially in parallel along the longitudinal extension.

Furthermore, the lamella comprises first and second (or front and back) opposed surfaces 123 and 124.

The lamella 115.n shown in Figs 1F and 1G has a Fresnel-type profile. In the embodiment shown, the lamellae 115.n comprises and is generally formed by a succession segments 37 in the longitudinal direction. Each segment 37 has at least two parts, 38, 39, which combine to form an elevation and/or tooth, giving the profile an overall serrated aspect. In the embodiment shown, one part 38 raises the lamella with respect to a starting point or ground level, and the other part 39 returns back to the starting point level, when seen in a rear to front direction. In the embodiment shown, the segments 37 of the overall lamella 115.n are identical, but this does not need to be the case. In the embodiment shown, the raising parts 38 are vertical when the lamella is seen in profile (Fig. 1G), but they may also be different from vertical. In the embodiment shown, the returning or exposed parts 39 are curved, but they may also be different, for example flat. The returning part 39 is the part that generally provides the main part of the surface that is provided for being exposed, for example to radiation, sunlight, or other meteorological factors, whereas the raising part 38 has the purpose of enabling the provision of the desired orientation, inclination, curvature, and so forth, to the exposed parts 38. If the lamellae is provided for redirecting radiation, for example by reflection, for example, then the upper surfaces 123 of the exposed parts 39 is provided for enabling the desired redirection of radiation, for example by supporting a light redirecting material deposited on the upper surface 123 of the exposed part 39.

The embodiment in Figs 1F and 1G illustrates that the lamellae of the device of the invention may have any form and may in particular have a 3-dimensional form. The invention is thus not limited with respect to any particular form of the lamellae. It is preferable, however, that the lamellae have complementary forms so as to allow for stacking in a preferably space-saving manner, avoiding the presence of voids or empty spaces when the lamellae are stacked. The lamellae may present any profile such as flat, curved, zigzagged, toothed, corrugated, serrated, crenellated profile, just to mention some examples. Preferably, the dimensions, sizes and/or forms of the lamellae are adapted so as to allow stacking of successive lamellae.

In an embodiment, the device comprises lamellae 15 of different and/or varying longitudinal extension or length. Lamellae of increasing and/or decreasing size may be disposed successively, for example. In an embodiment, said plurality of lamellae are disposed in said device in an order of increasing and/or decreasing length, such that a first lamella 15.1 is longer than a second lamella 15.2, the second lamella being longer than a third lamella 15.3, and so forth, the last lamella 15.z being the shortest lamella. More generally a lamella 15.n-1 may be longer or have the same length than a directly successive lamella 15.n, or vice versa, a lamella 15.n may be shorter or may have the same length than a directly successive lamella 15.n+1. This embodiment may be varied in manifold ways. For example, some of the lamellae may have the same lengths and others of the same group and/or device may have different, e.g. decreasing and/or increasing lengths. In another variation, a first part of the lamellae of a device (or of a group of the device) has the same lengths, followed by second part of successive lamellae having increased or decreased lengths, compared to said first part. In the embodiment shown in Fig. 2C, the device comprises two groups 31, 32 of lamellae, wherein the lamellae of a first part of each group (about five or six lamellae) each have the same length, and the lamellae of a second part of lamellae (about 6 lamellae) have decreasing lengths, resulting in a wing-like outline when the device is deployed.

As is visible in Figs 1B and 1C, the lamellae 15 of the embodiment shown have different lengths, such that, in Figs 1A and 1B, a stair-like or staggered aspect is created by extremities of successive lamellae.

In an embodiment, each lamella has first and second extremities, wherein said device comprises lamellae of different lengths, and wherein said lamellae are staggered when said plurality of lamellae are in their stacked position. Preferably, the lamellae of a plurality of lamellae are aligned at a first extremity, such that said lamellae are staggered at said respective other, opposed and/or second extremity.

In particular, in the device as shown in Figs 1A and 1B, an extremity 29.n-1 of a respective preceding lamella 15.n-1, exceeds, in the longitudinal extension of the lamella, the extremity 29.n of a successive lamella 15.n, thereby preferably creating a staggered aspect when said lamellae are stacked. Vice versa (not shown), an extremity 29.n of a respective successive lamella 15.n, exceeds, in the longitudinal extension of the lamella, the extremity 29.n-1 of a respective preceding lamella 15.n-1, thereby preferably creating a staggered aspect when said lamellae are stacked.

The device of the invention preferably comprises a support 30 on which said lamellae 15 or groups of lamellae 31, 32 are supported. The support remains preferably fix, immobile and/or non-deployable compared to the displacement movement during the deployment and/or retraction of the lamellae described in more detail elsewhere in this specification. In the embodiment shown in Figs 1A-1D, the support 30 is itself a lamella (a "support lamella"), which lamella may have a similar general appearance as the lamellae 15 that are deployable.

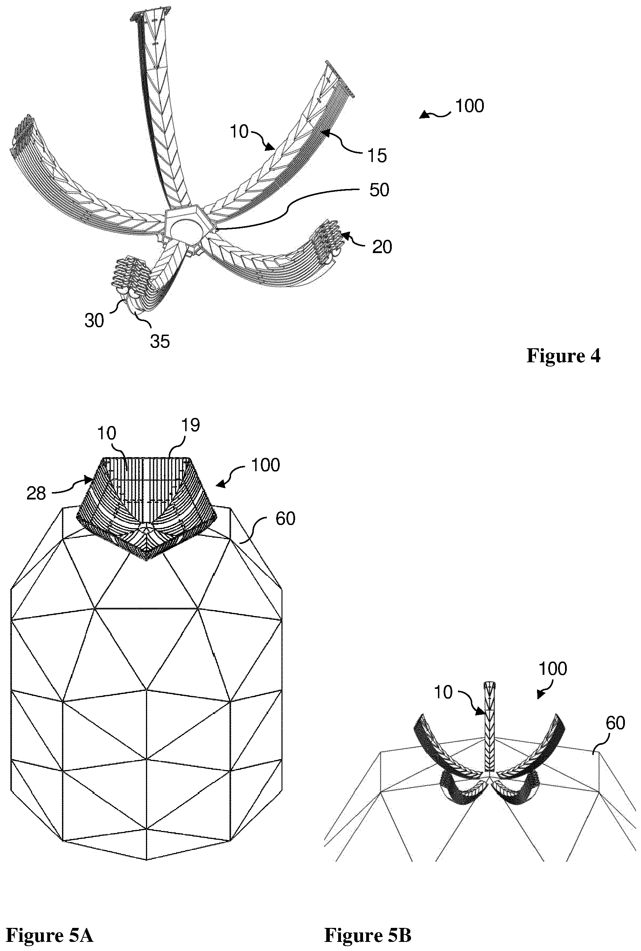

In the embodiment shown, the support lamella 30 is wider than the deployable lamellae 15, and in particular about twice as wide or wider, so as to be able to support two or more stacks or groups 31, 32 of lamellae as shown. The support lamella 30 of the device 10 is itself preferably rigidly mounted on a base, socket or frame 50, shown in Fig. 4.

In an embodiment, the device comprises a rigid, non-displacing support 30, wherein, in said stacked position, said lamellae are stacked on top of and/or below said rigid support and/or wherein said rigid support is pivotally connected by a rigid link to a first displacing lamella 15.1 of said plurality of lamellae.

In an embodiment, the device comprises a rigid support 30 connected to first and second groups 31, 32 of lamellae, wherein in said stacked position, said first and second groups 31, 32 of lamellae are stacked on top of and/or below said rigid support.

The device of the invention preferably comprises a mechanical arrangement 20 comprising rigid links 11, 12, 13 pivotally connecting successive lamellae 15, said mechanical arrangement 20 enabling and/or guiding the displacement of said lamellae between said retracted and deployed positions.

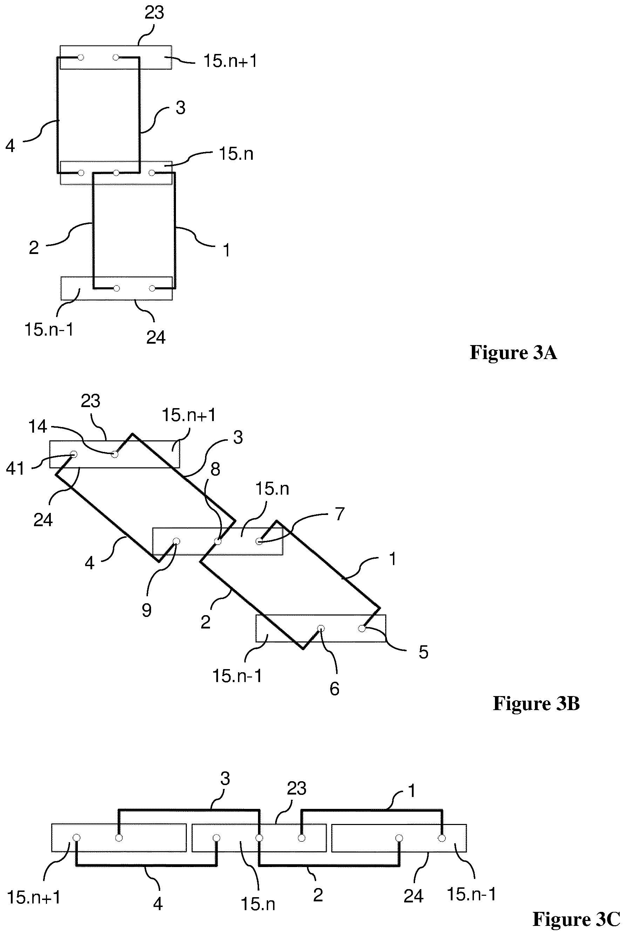

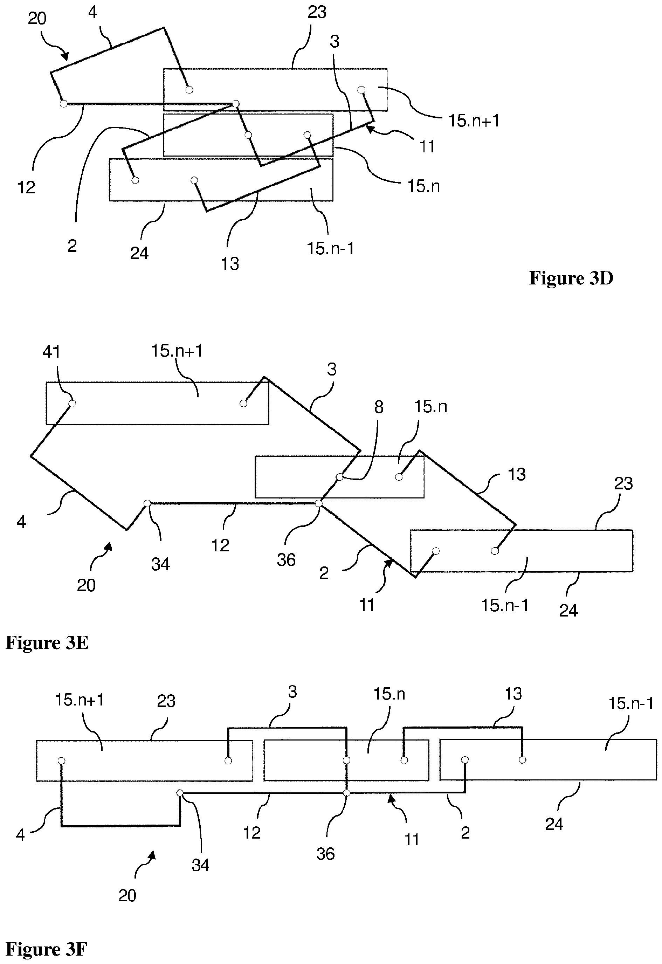

**Figures 2A** to **2C** show an embodiment of a device in which an embodiment of a mechanical arrangement 20 for enabling and/or guiding the deployment and/or retraction of the plurality of lamellae 15 is visible. **Figures 3A** to **3C** schematically illustrate the mechanical principle of a mechanical arrangement that can be used for the purpose of the present invention.

In an embodiment, said mechanical arrangement 20 is arranged and/or configured so as to displace said lamellae 15 in a direction that is perpendicular to the direction of the longitudinal extension of the lamellae, for example perpendicular to the lateral sides 25, 26 of the lamellae.

In an embodiment, said mechanical arrangement 20 is arranged and/or configured so as to cause successive lamellae to conduct a parallel motion movement. Preferably, said parallel motion movement is such that an orientation of front surface 23 of said lamellae 15 remains substantially constant during said parallel motion movement and/or during the displacement of said lamellae between said retracted and deployed positions. The same applies generally for the back surface 24.

In an embodiment, said mechanical arrangement 20 comprises a plurality of four-bar linkages 1, 2, 15.n, 15.n+1, preferably a parallelogram linkage. These four-bar linkages may be realized as parallel motion linkages, and the reference to "four-bar linkage" is thus considered as a reference to a parallel motion linkage. It is also noted that the term "four-bar linkage" is to be understood as a reference to a type or principle of linkage and should not be understood as a reference to a linkage having necessarily exactly four bars or links. As shown in Figs 3E-3G, additional links 12 may be provided for optimizing certain properties of the device, such as space. Such linkages are still considered as "four-bar linkage", even if the number of links exceeds the number of four.

As can be seen in Figs 3A-3C, a four-bar linkage may be formed by rigid links 1, 2, which are pivotally connected to at least two successive and/or neighboring lamellae 15.n and 15.n+1 or 15.n-1 and 15.n. The links 1, 2, 3, 4 may be made of any rigid material, and may comprise metal, wood, rigid plastics, and so forth, so as to achieve the required rigidity.

In the embodiment shown, the lamellae are sufficiently rigid so that they are integrated into the four-bar linkage, that is, they also constitute rigid links. In Figs 3A-3C, the successive lamellae 15.n-1, 15.n and 15.n+1 are shown as if they are cross-sections, such that the width and the thickness of the lamellae are shown, but not the longitudinal extensions. The width of each lamellae corresponds to the horizontal extension of the lamellae in In Figs 3A-3C. A first link 1 is pivotally connected to a first lamellae 15.n-1, and to a second, successive lamellae 15.n. A second link 2 is also connected to said first and second lamellae 15.n-1 and 15.n.

The pivotal connections 5, 6 of the first and second links 1, 2, respectively, to said first lamellae 15.n-1 are preferably spaced-apart along the width of the lamella, such that said lamellae 15.n-1 functions as a linkage of said four-bar linkage. Similarly, the pivotal connections 7, 8 of the first and second links 1, 2, respectively, to said second lamellae 15.n, are preferably spaced-apart along the width of the lamella, such that said lamellae 15.n functions as a linkage of said four-bar linkage. In the same manner, pivotal connections 14, 41 at the lamella 15.n+1 are spaced apart along the width of the lamella, so as to form a four bar linkage with the lamella 15.n.

Overall, the rigid links 1, 2 and the lamellae 15.n-1 and 15.n form a four-bar linkage with four links 1, 2, 15.n-1 and 15.n, and four pivotal connections 5, 6, 7, 8. Furthermore, rigid links 3, 4 and the lamellae 15.n and 15.n+1 form a four-bar linkage with four links 3, 4, 15.n and 15.n+1, and four pivotal connections 8, 9, 14, 41. By way of the combined link 2, 3, the two four bar linkages are coupled so as to exhibit synchronous deployment and/or retraction.

In Figs 3A-3C, Fig 3A represents the stacked position, Fig. 3C the deployed position, and Fig. 3B an in-between position during deployment and/or retraction. One may set lamellae 15.n-1 as preceding lamella, lamellae 15.n and sandwiched lamella and lamella 15.n+1 as succeeding lamella. Using this terminology, one can see that rigid link 2 further extends as link 3 from the sandwiched lamellae 15.n, which link 3 is pivotally connected at connection 14 to the successive lamellae 15.n+1. Links 2 and 3 form a rigid entity and are generally formed in one piece, which may also be referred to as combined link 2, 3.

A further four bar linkage is formed by the four links 3, 4, 15.n and 15.n+1, where the lamellae 15.n and 15.n+1 are again part of the four bar linkage thanks to their rigidity. Due to the combined link 2, 3, the two four bar linkages are connected.

By using combined links, which are pivotally linked to at least three successive lamellae, it is possible to achieve a synchronous, simultaneous deployment/retraction of all lamellae 15 of the device.

The mechanical arrangement 20 used with the device of the embodiment shown in Figs 2A-2C is based on the same general principle as shown in Figs 3D-3F. Compared to the mechanical principle illustrated in Figs 3A-3C, the arrangement 20 is adapted so as to gain space when the lamellae are stacked. As can be seen in Figs 2A-2C, a combined link 11 is pivotally connected to three successive (or preceding) lamellae, and to a first auxiliary link 12, which is pivotally connected to preceding or succeeding combined link 11. The links 11 and 12 form a linkage system, which may be connected at or in proximity of a first extremity of the lamellae, for example. A second auxiliary link 13 (Fig. 2C) is provided spaced apart from the combined link 11 and the first auxiliary link 12 in the longitudinal direction along the lamellae and connects pivotally neighboring lamellae, thereby creating the functional four-bar linkage. Thanks to this way of pivotally connecting the rigid links 11, 12, 13 with the lamellae it is possible to provide a mechanical arrangement that reduces the thickness of the device when the lamellae are stacked, as these links contribute less to the thickness when the lamellae are stacked, as can be seen from the comparison with Fig. 3A.

**Figures 3E-3F** shows a mechanical arrangement 20 used with three successive lamellae 15.n-1, 15.n and 15.n+1 illustrating the mechanical principle of the parallel motion movement embodied in the device shown in Figs 2A-2C. One can see the combined link 11, encompassing partial links 2 and 3, pivotally interconnecting all three lamellae 15.n-1, 15.n and 15.n+1. Compared to the embodiment shown in Figs 3A-3C, an additional link 12 is provided, which is pivotally connected to link 4 at articulation 34 and to the combined link 11 at articulation 36. Consequently, the link 4 is still connected to lamella 15.n+1, but no longer directly to lamella 15.n, but via said combined link 11 at articulation 36. Link 4 is thus indirectly connected pivotally to lamellae 15.n. Articulation 36 is provided in vicinity to articulation 8. As can be seen from Fig. 3E, the stacking of the three lamellae one above the other is more space efficient compared to the stacking shown in Fig. 3A. In particular, the free space and/or the distance separating successive lamellae in the stacked position is minimized.

Link 13 in Figs 3D-F corresponds to link 1 in Figs 3A-3C. In the embodiment of the device shown in the figures, this link 13 is spaced-apart from the other links of the mechanical arrangement 20 in the longitudinal direction of the lamella, as can be seen, for example, in Fig. 2C. In the device shown in Figs 2A-2C, link 13 is pivotally connected to axles provided in the lateral slots 33 provided towards the front side 27.n of the lamellae (Fig. IE). Since the lamellae in the embodiment shown are rigid and form part of the parallel motion linkage, the spacing apart of the links in the longitudinal direction has no impact on the principle illustrated in Figs 3D-F. Taking into account the longitudinal extension, the spacing-apart of the links 13 results in increased stability of the device as a whole, since it allows for stabilizing the lamellae at both extremities 27.n, 21.n, or in proximity to these extremities.

As a further difference, which is not mandatory, the three lamellae in Figs 3D-3F are shown not to have identical width, in that lamellae 15.n-1 and 15.n+1 have a larger width than lamellae 15.n. This is a design option available to the skilled person which is not mandatorily associated with the mechanical principle illustrated in these figures.

The mechanical arrangement 20 comprising three lamellae in Fig 3D-3F (as well as the one shown in Figs 3A-3C) may be extended by adding a successive lamella 15.n+2 and replacing link 4 with another linkage 11, such that linkage 4 corresponds to the partial link 2, and articulation 41 (Fig. 3B) corresponds to another articulation 8. Furthermore, a further link of type 12 and a further link as link 4 need to be added for pivotal connection to the additional lamella 15.n+2 to complete the linkage with four lamellae. The mechanical arrangement can thus be prolonged as desired by the person skilled in the art on either side by adding more lamellae and links to the device.

In the embodiment shown, the mechanical arrangement 20 further comprises two toothed rotatable wheels 22, wherein each wheel is pivotally connected with the first lamella and with an auxiliary link of the mechanical arrangement. The two wheels 22 are mechanically coupled through their teeth, such that rotation of one wheel directly results in rotation of the other wheel. Each wheel is further pivotally connected with the support lamella 30, one wheel being pivotally connected with first group of lamellae 31, the other wheel with the second group 32 of lamellae.

In order to cause the deployment and/or retraction of the device of the invention, a directed force can be applied at any suitable position of the device. For example, force can be applied so as to act on a lamella, thereby causing the corresponding movement of the lamellae of the entire device. As another example, one may envisage a force acting on one of the wheels 22, causing the wheel to rotate and thereby to deploy and/or retract the lamellae, depending the direction of the force. By applying the appropriate force, the device can be brought to the deployed and retracted positions and be switched between these positions.

The invention envisages any suitable means or devices for acting on the device so as to cause retraction and/or deployment, for example a motor (e.g. electric or other), manually and/or by a hydraulic device, such as a device comprising a hydraulic piston, for example.

When the device of the invention is deployed, it has generally an overall laminar and/or relatively thin appearance, presenting a relatively large, preferably about continuous area and/or surface, formed by the upper surfaces 23 of the dispersed, for example side-by-side aligned, lamellae 15. The overall surface generally is defined by an outline. As shown with respect to Figs 1C and 2C, the outline may comprise a plurality of distinguishable sides 16, 17, 18, 19, for example two lateral sides 16, 17, a top side 19 and optionally a bottom side 18. Said sides may define a two-dimensional shape and/or a three-dimensional shape, which may be projected to a flat surface so as to define a two-dimensional shape. Said sides may be straight or curved, and the area defined by the deployed device may comprise both, straight and curved sides.

In an embodiment, with said lamellae 15 being in said deployed position, said increased overall area has one selected from a non-rectangular outline and a rectangular outline, wherein said non-rectangular outline is preferably selected from an outline comprising curved sides 16, 17, a triangular outline and a trapezoid outline. The invention encompasses polygonal outlines of the deployed device, for example. In an embodiment, the outline of the device is preferably the outline of a projection obtained by projecting the deployed device on a flat surface. In this case, the flat surface on which the deployed device is projected is preferably oriented normal to the light used for the projection and the deployed device is preferably positioned such that the overall surface of the projection on the flat surface is maximised.

For example, the deployed device shown in Fig. 1C has an overall triangular outline, if one ignores the bottom side 18 formed by the support lamella 30. If one takes into account the bottom side 18 formed by the support lamella 30, the overall shape defined by the sides of the deployed device can be seen as trapezoid.

The outline of the deployed device 10 shown in Fig. 2C resembles a trapezoid having two curved corners or side, due to the sides 16, 17 and 18 being partially curved.

Accordingly, the invention encompasses manifold outlines of the deployed device, the outline being defined by the shapes of the individual lamellae 15, when being provided next to each other in the deployed position.

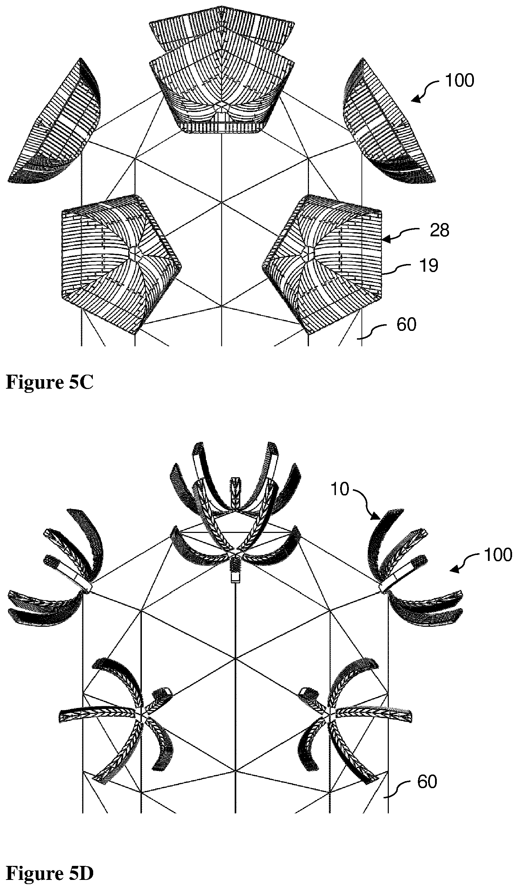

**Figures 4** and **5A** through **5D** show assemblies 100 comprising a plurality of devices 10 of the invention, and the use of the assemblies with or on buildings (Figs 5A-5D).

In an embodiment, the device and the assembly of the invention may be fixed to and/or mounted on a constructions and/or site of all sorts, such as buildings, transport infrastructure, including bridges, railways, and streets, sheds, fields (for agriculture), gardens, greenhouses to mention some examples. In an embodiment, the device and the assembly of the invention may be put directly on the ground. the device and the assembly may be fixed to and/or mounted on the ground, for example in cases where the device serves as a support or carrier structure for another functionality, such as photovoltaic cells and/or panels, and/or any other functionality, including functionalities that aim at exploiting environmental and/or meteorological factors, for example for the purpose of harvesting energy.

In an embodiment, a plurality of rigid, non-displacing supports 30 of said plurality of laminar deployment assemblies 10 are joined and/or fixed at a common socket 50. Figure 4 shows five devices as described hereinabove fixed to a base or socket 50. In particular, the support lamella 30 is fixed at its bottom side 18 (Fig. 1C) to the socket. In the embodiment shown in Fig. 4, a reinforcing structure 35 is provided at the rear surface of the support lamella 30.

As shown, the socket 50 has a pentagonal shape, with the base of each support 30 being mounted on one side of the pentagon. In Fig. 4, the five devices 10 are shown in the retracted position, with the two groups of lamellae in each device being stacked on the support. The five retracted devices 10 have an overall rod-like appearance, resulting in a sea-star-like appearance of the overall assembly 100.

Figs 5A and 5B show a building 60, on which the assembly 100 is mounted. In Fig. 5A, the assembly is shown with all five devices being in the deployed position. As can be seen, in the deployed position, the lateral sides 16, 17 of the deployed devices come to be close and/or next to each other, with a right side 16 of a first device being aligned with a left side of a second device, and so forth, until an overall pentagonal outline is formed, in particular a form resembling a parabola-type antenna having a pentagonal outline.

In an embodiment, the assembly comprises the form of a polygonal and/or faceted paraboloid.

It is noted that the particular form and/or outline of the assembly 100 comprising a plurality of devices 10 as shown in the figures is simply one embodiment and that the device may be designed so as to assume any desired form and/or outline.

In an embodiment of the assembly of the invention, each individual laminar deployment device (LDD) 10 of said plurality of LDDs, when being deployed, forms an area having an outline defined by two or more sides 16-19, said two or more sides comprising at least one overall outline defining side 19. Since the assembly 100 comprises a plurality of devices, the assembly comprises a plurality of overall outline defining sides 19, for example the overall outline defining sides 19 of each of the five devices 10 of the assembly shown in Fig. 5A. As has been demonstrated at the embodiment shown in Figs 5A-5C, when said plurality of LDDs 10 are deployed, the assembly 100 of the embodiment shown comprises an overall area defined by an overall outline 28. The overall outline 28 is thus formed by said plurality of overall outline defining sides 19 of said individual LDDs.

In particular, each overall outline defining side 19 preferably comprises two free ends, one of the free ends being adjacent to the end of the overall outline defining side 19 of another, neighboring device, and the other free end being arranged next to the end of the overall outline defining side 19 of yet another device, and the devices being disposed such that, when they are deployed, the overall outline defining sides 19 of the devices in the device form a closed overall outline 28 of the assembly.

In the embodiment shown in Figs 5A-5C, the outline 28 is a pentagon.

In an embodiment, said overall outline 28 of the assembly defines a symmetrical area, preferably a polygon, more preferably a polygon selected from a triangle, pentagon, a hexagon area and a rectangle. In other embodiments, the overall outline is not symmetrical and/or does not define a form characterized by the presence of only straight lines or line segments. The assembly of the invention may have an overall outline that comprises curved line segments and/or straight line segments.

In Fig. 5B, the five devices of the assembly 100 are retracted, each device forming an extension, finger or arm, extending from the common socket (see Fig. 4) in a star-like manner, each arm-forming device 10 being oriented at an angle of 72° with respect to the two neighboring arms.

Fig. 5C shows a building 60 on which a plurality of assemblies 100 are mounted. The assemblies are shown spaced-apart from each other, such that, when they are in the deployed position, there is free area or space between them. They may also be arranged next to each other in such a manner so as to form a continuous area or continuous cover covering the building at least partially or possibly totally.

The devices 10 and assemblies 100 of the invention may be used as a support for particular functionalities that exploit sunlight, such as photovoltaic devices, or the heat of sunlight. They may also be used as an adjustable shading structure and/or for the protection from meteorological factors such as, for example, from rain, snow, hail, and sun of a space or area, for example of a building as shown in the figures.

As has been mentioned in the introduction, it is an objection of the invention to provide an adjustable device, allowing preferably to adjustably protect from meteorological exposure, and/or to adjust the impact of a meteorological factor on the construction.

In case of an assembly comprising several devices as shown in Figs 4-5D, one, several or all of the devices of the assembly may be deployed, the other devices being retracted. By selecting the devices that are deployed or retracted, respectively, the adjustment of the protection from (or of the device to) the meteorological factors can be adjusted.

Adjustment may further be obtained by selecting the distance by which different assemblies and or devices of the invention are spaced-apart. Assemblies and/or devices may be positioned so as to continuously cover an area on the ground or of a construction, or they may be positioned more spaced apart so as to partially provide protection when deployed. The continuous coverage may be obtained by choosing the form of the deployed device such that appropriate disposition of the devices and/or arrangement provides a continuous coverage.

Furthermore, the devices may be deployed partially, such as to only cover partially the ground or construction on which it is mounted. By providing the possibilities of the retracted position, deployed position and one or more partially deployed positions, an adjustable protection from (or exposure to) meteorological factors is obtained.

In an embodiment, one, several or all of said plurality of lamellae 15 comprise one or more selected from the group consisting of: a photovoltaic device, a non-transparent material, a light-reflecting material, and a combination of two or more of the aforementioned. The photovoltaic device, non-transparent material and/or light-reflecting material is preferably provided on one of the front or back surfaces of the lamellae, preferably on the front surface of the lamellae.

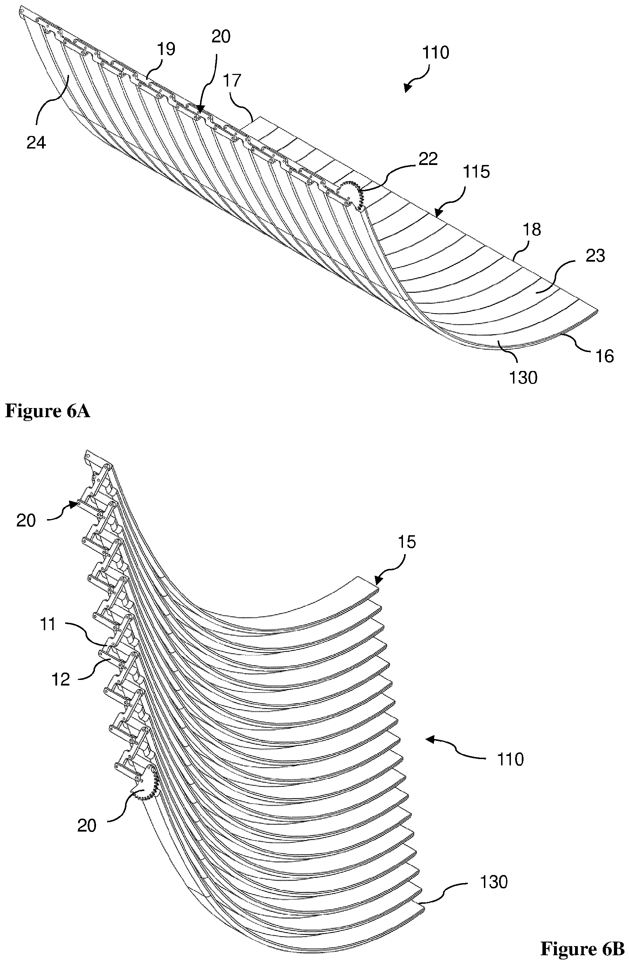

**Figures 6A, 6B** and **6C** show a device 110 according to another embodiment of the invention, which differs from the devices shown in Figs 1A-2C in that the plurality of lamellae 115 all have the same dimensions, and thus identical length, identical width, identical left- and right-side extensions and substantial identical front and rear side surfaces. The lamellae all have an overall rectangular outline when seen in a top down perspective or projection. In the embodiment shown, the lamellae are also curved in the longitudinal extension of the lamellae. As a consequence, when the device is in the deployed position as shown in Fig. 6A, the overall shape of the device is a curved plane having rectangular contour when seen from in a top down view, in a direction that is normal to a point on the (curved) front or top surface of the device. In particular, the left and right sides 16, 17 of the deployed device 110 extend in parallel, and the top and bottom sides 19, 18 also extend in parallel.

In the embodiment shown in Figs. 6A-6C, there is only one group of lamellae instead of the two groups 31, 32 of the devices shown in Figs 1A-2C. Therefore, the support lamellae 130 has the same general shape and outline as the other lamellae.

The mechanical arrangement 20 of the device shown in Figs 6A-6C is made in the same manner as the mechanical arrangement of the device 10 shown in Figs 2A-2C, and is therefore not described anew. It is noted that the second auxiliary links 13, which pivotally connects neighbouring lamellae at a position at a distance from the main link 11 and first auxiliary link 12, is not shown in Figs 6A-6C.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

## Claims

1. A deployment device (10) comprising a plurality of lamellae (15) provided to be in a first, retracted position, in which said lamellae are stacked, and in a second, deployed position, in which said lamellae are dispersed and/or disposed side by side thereby covering an increased area, wherein said laminar deployment device comprises a mechanical arrangement (20) comprising rigid links (11, 12, 13) pivotally connecting successive lamellae (15), said mechanical arrangement (20) enabling and/or guiding the displacement of said lamellae between said retracted and deployed positions.

2. The deployment device of claim 1, wherein said lamellae comprise a longitudinal extension, and wherein said mechanical arrangement (20) is arranged so as to displace said lamellae (15) in a direction that is perpendicular to said longitudinal extension.

3. The deployment device of claim 1 or claim 2, wherein said mechanical arrangement (20) is arranged so as to cause successive lamellae to conduct a parallel motion movement, wherein an orientation of front surface (23) of said lamellae (15) remains preferably substantially constant during said parallel motion movement and/or during the displacement of said lamellae between said retracted and deployed positions.

4. The deployment device of any one of the preceding claims, wherein said mechanical arrangement (20), together with a lamellae (15.n) or a pair of successive lamellae (15.n, 30.n+1), form a four-bar linkage (1, 2, 15.n, 15.n+1), preferably a parallelogram linkage.

5. The deployment device of any one of the preceding claims, comprising a rigid, non-displacing support (30), wherein, in said stacked position, said lamellae are stacked on top of and/or below said rigid support and/or wherein said rigid support is pivotally connected by a rigid link to a first displacing lamella (15.1) of said plurality of lamellae.

6. The deployment device of any one of the preceding claims, wherein a rigid support (30) is connected to first and second groups (31, 32) of lamellae, wherein in said stacked position, said first and second groups (31, 32) of lamellae are stacked on top of and/or below said rigid support.

7. The deployment device of any one of the preceding claims, wherein said lamellae are rigid and/or comprise a rigid material.

8. The deployment device of any one of the preceding claims, comprising lamellae (15) of different and/or varying longitudinal extension, wherein lamellae of increasing and/or decreasing size are disposed successively.

9. The deployment device of any one of the preceding claims, wherein, with said lamellae (15) being in said deployed position, said increased overall area has one selected from a non-rectangular outline and a rectangular outline, wherein said non-rectangular outline is preferably selected from an outline comprising curved sides (16, 17), a triangular outline and a trapezoid outline.

10. The deployment device of any one of the preceding claims, comprising lamellae which are curved, preferably in the direction of their longitudinal extension and/or in a direction that is perpendicular to a direction of deployment.

11. The deployment device of any one of the preceding claims, wherein a stack formed by said stacked lamellae, is curved in the longitudinal direction of said lamellae.

12. The deployment device of any one of the preceding claims, wherein one, several or all of said plurality of lamellae (15) comprise one or more selected from the group consisting of: a photovoltaic device, a non-transparent material, a light-reflecting material and a combination of two or more of the aforementioned.

13. An assembly (100) comprising a plurality of individual laminar deployment devices (LDDs) (10) according to any one of claims 1-9, wherein
- each individual LDD (10) of said plurality of LDDs, when being deployed, forms an area having an outline defined by two or more sides (16-19), said two or more sides comprising at least one overall outline defining side (19), the assembly comprising a plurality of overall outline defining sides (19),
- with said plurality of LDDs (10) being deployed, said assembly (100) comprises an overall area defined by an overall outline (28),
- said overall outline being formed by said plurality of overall outline defining sides (19) of said individual LDDs.

14. The assembly (100) of claim 13, wherein said overall outline defines a symmetrical area, preferably a polygon, more preferably a polygon selected from a triangle, a pentagon, a hexagon area and a rectangle.

15. The assembly (100) of claim 13 or claim 14, wherein a plurality of rigid, non-displacing supports (30) of said plurality of laminar deployment assemblies (10) are joined at and/or fixed at a common socket (50).

16. The deployment device (10) of any one of claims 1-11 and/or the assembly of any one of claims 12-14 as a support for photovoltaic devices and for the protection from meteorological factors such as, for example, from rain, snow, hail, and sun of a space or area.

17. A site, zone or area, such as an agricultural field, or construction, such as a building (60), comprising the deployment device (10) of any one of claims 1-12 and/or the assembly of any one of claims 13-16.
